# EUROPEAN PATENT APPLICATION

(11) **EP 2 544 152 A2**
(43) Date of publication of application: **09.01.2013**
(21) Application number: 12175358.6
(22) Date of filing: 06.07.2012
(51) Int. Cl.: G06T 15/40

(54) **Management of multiple interface display layers**

(30) Priority: 07.07.2011 US 201161505298 P; 06.07.2012 US 201213543390
(71) Applicant: HTC Corporation, Taoyuan County 330 (TW)
(72) Inventor: Hou, Chun-Yao, 330 Taoyuan City Taoyuan County (TW); Huang, Chun-Hsiang, 330 Taoyuan City Taoyuan County (TW); Lu, Tai-Ling, 330 Taoyuan City Taoyuan County (TW)
(74) Representative: 2K Patentanwälte Blasberg Kewitz & Reichel

(57) **Abstract**

Methods and systems for displaying interfaces are provided. In an embodiment of invention, a method for displaying interfaces for use in an electronic device is provided. The method comprises providing an interface comprising at least one interface object (S810); selecting an interface display layer (S820); obtaining a first object from an image (S830); selecting a first display layer (S840); and displaying the first object in the first display layer and the interface object in the interface display layer simultaneously on a screen of the electronic device (S870), wherein the first displayer is above the interface display layer.

## Description

### BACKGROUND OF THE INVENTION

### FIELD OF THE INVENTION

The disclosure relates generally to interface management, and, more particularly to methods and systems for displaying interfaces with multiple display layers.

### DESCRIPTION OF THE RELATED ART

Recently, portable devices, such as handheld devices, have become more and more technically advanced and multifunctional. For example, a handheld device may have telecommunications capabilities, e-mail message capabilities, an advanced address book management system, a media playback system, and various other functions. Due to increased convenience and functions of the devices, these devices have become necessities of life.

Generally, a handheld device can install a large amount of functions which are implemented as widgets, applications, virtual or physical buttons, or any other kind of executable program code. Due to the size limitation of screens or other classification requirements, several interfaces, such as menus or pages can be provided in the handheld device. Users can perform a switch operation to switch between the interfaces by using a virtual or physical key, or a touch-sensitive screen.

Conventionally, users select an image and set the image as a background for the interfaces. Since no management is performed to the image, the visual effect of the image is always disappointing. For example, when an image of a character or a specific object is selected as the background, the character or the specific object may be covered by the interface objects, such as widgets, applications, icons, or virtual buttons.

Additionally, the conventional display of the background and interface are uninteresting. Although dynamic wallpapers are available on some devices, users can only choose predefined wallpapers for display. This is also uninteresting.

### BRIEF SUMMARY OF THE INVENTION

To enhance the value of devices and increase user experience, it is an objective of the present application to provide functional and applicable interface display methods and systems for electronic devices.

Methods and systems for displaying interfaces are provided.

In an embodiment of invention, a method for displaying interfaces for use in an electronic device is provided. The method comprises providing an interface comprising at least one interface object; selecting an interface display layer; obtaining a first object from an image; selecting a first display layer; and displaying the first object in the first display layer and the interface object in the interface display layer simultaneously on a screen of the electronic device, wherein the first displayer is above the interface display layer.

Another embodiment of invention provides a system for displaying interfaces. The system includes a storage unit, a screen, and a processing unit. The storage unit stores a first object and an interface object. The screen displays multiple display layers, wherein when the multiple display layers are simultaneously displayed on the screen, all or a part of the data displayed in a lower display layer may be covered by data displayed in an upper display layer, and the upper display layer is visually above the lower display layer. The processing unit selects an interface display layer from multiple display layers and a first display layer above the interface displayer, and display the first object in the first display layer and the interface object in the interface display layer simultaneously on the screen.

Methods for displaying interfaces may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a system for displaying interfaces of the invention;

Fig. 2A is a schematic diagram illustrating an embodiment of a multiple display layer structure of the invention;

Fig. 2B is a schematic diagram illustrating a side-view of the multiple display layers in Fig. 2A of the invention;

Fig. 3 is a flowchart of an embodiment of a method for displaying interfaces of the invention;

Fig. 4 is a flowchart of another embodiment of a method for displaying interfaces of the invention;

Fig. 5 is a flowchart of another embodiment of a method for displaying interfaces of the invention;

Fig. 6 is a flowchart of an embodiment of a method for displaying interface objects of an interface of the invention; and

Fig. 7 is a flowchart of another embodiment of a method for displaying interfaces of the invention.

Fig. 8 is a flowchart of another embodiment of a method for displaying interfaces of the invention.

Fig. 9 is a schematic diagram illustrating an embodiment of an electronic device for displaying interfaces of the invention.

### DETAILED DESCRIPTION OF THE INVENTION

Methods and systems for displaying interfaces are provided.

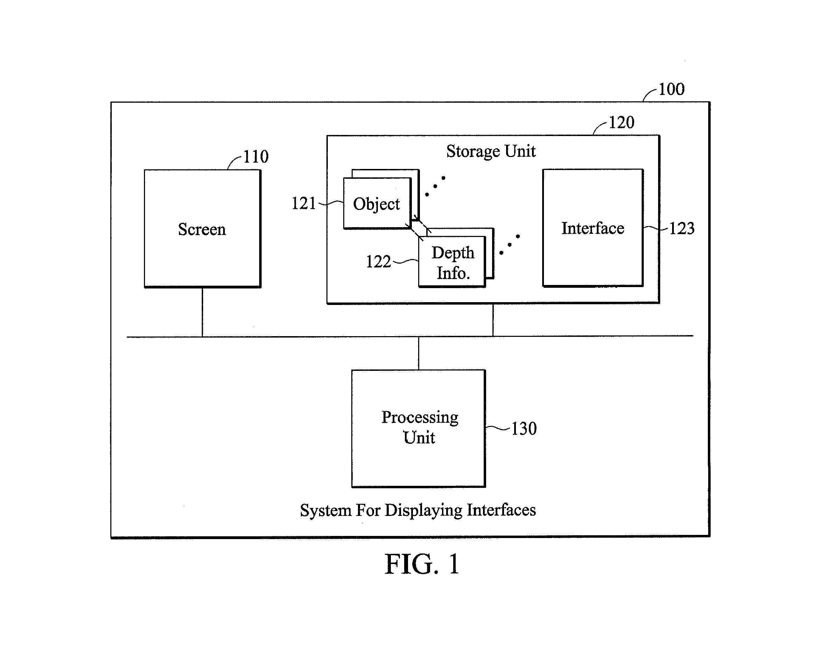

Fig. 1 is a schematic diagram illustrating an embodiment of a system for displaying interfaces of the invention. The system for displaying interfaces can be used in an electronic device, such as a PDA (Personal Digital Assistant), a smart phone, a mobile phone, an MID (Mobile Internet Device, MID), a laptop computer, a car computer, a digital camera, a multi-media player, a game device, or any other type of mobile computational device, however, it is to be understood that the invention is not limited thereto.

The system for displaying interfaces 100 comprises a screen 110, a storage unit 120, and a processing unit 130. The screen 110 can display data, such as texts, figures, interfaces, and/or information. It is understood that, in some embodiments, the screen 110 may be integrated with a touch-sensitive device (not shown). The touch-sensitive device has a touch-sensitive surface comprising sensors in at least one dimension to detect contact and movement of at least one object (input tool), such as a pen/stylus or finger near or on the touch-sensitive surface. Accordingly, users are able to input commands or signals via the screen. It is noted that, the data displayed on the screen is based on a multiple display layer structure, wherein a plurality of objects can be displayed in different display layers.

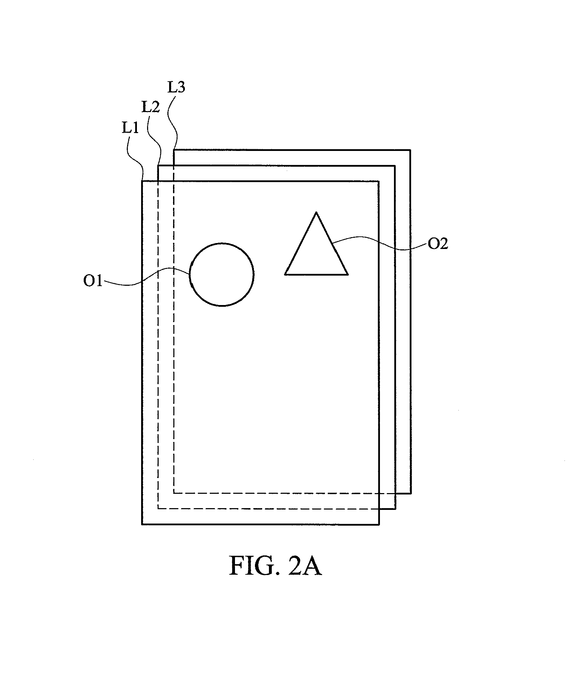

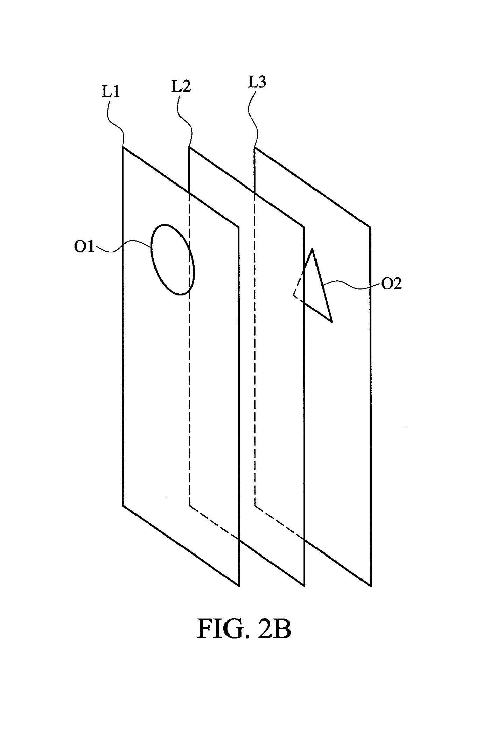

Fig. 2A is a schematic diagram illustrating an embodiment of a multiple display layer structure of the invention, and Fig. 2B illustrates a side-view of the multiple display layers in Fig. 2A. As shown in Figs. 2A and 2B, the multiple display layer structure has three display layers L1, L2 and L3, in which first object O1 is deployed to be displayed in the display layer L1, and second object 02 is deployed to be displayed in the display layer L3. When the multiple display layers are simultaneously displayed on the screen 110, all or a part of the data displayed in a lower display layer may be covered by data displayed in an upper display layer. The upper display layer is visually above the lower display layer.

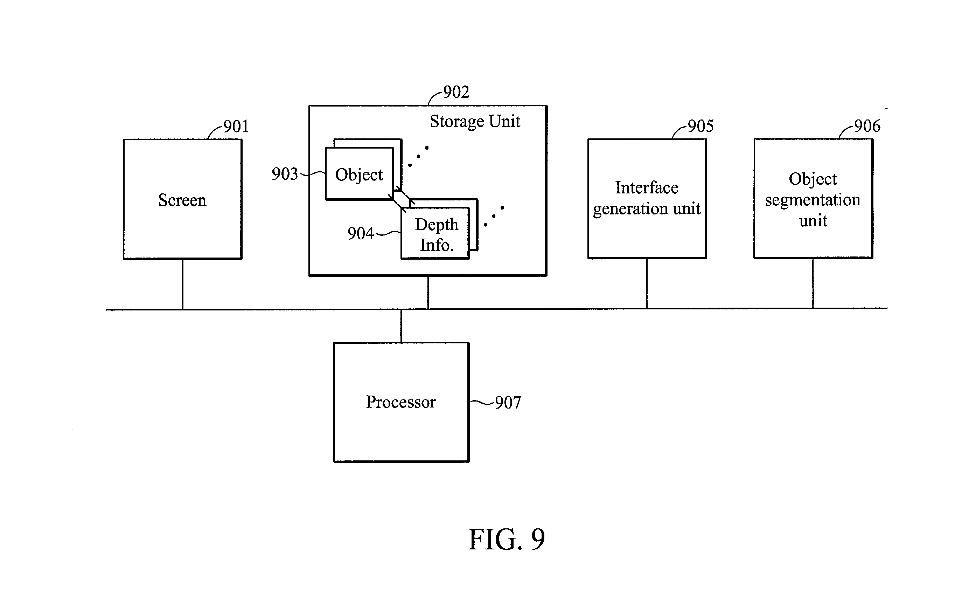

In one embodiment of the invention, the first object O1 and the second object 02 are retrieved from an image. An object segmentation operation is applied to the image. The detail operation of the object segmentation operation can be referred to Figs. 9-12 of the U.S. Provisional Application No. 61/ 505,298 filed July 7. 2011, the entirety of which is/are incorporated by reference herein.

The display layer L2 is for displaying an interface of an electronic device. In Fig. 2B, the first object O1 is regarded as a foreground object, the first object O1 is displayed in the display layer L1, thus, the first object will not be covered by icons of the interface. In Fig. 2B, the second object 02 is regarded as a background object, the second object 02 in the display layer L3, thus, the second object 02 may be covered by icons of the interface. To determine whether the object is a foreground object or a background object, a depth of the object is considered. In this embodiment, the first object O1 contains a first depth and the second object 02 contains a second depth. When the depth of an object is greater than a predetermined value, the object is regarded as a foreground object, such as the first object 01. When the depth of an object is not greater than the predetermined value, the object is regarded as a background object, such as the second object 02.

The storage unit 120 comprises a plurality of objects 121, each having corresponding depth information 122. It is understood that, in some embodiments, the system for displaying interfaces 100 may further comprise an image capturing unit, used for capturing at least one image. An object segmentation operation may be performed on the image to obtain the objects 121. It is noted that, the depth information can be used for 3D display, thus showing a 3D effect for corresponding objects on the screen 110. It is understood that, in some embodiments, the depth information can be obtained when the image is captured, or by assignment by users. The storage unit 120 further comprises at least one interface 122. It is understood that, in some embodiments, the interface 122 may be a page defined in by an Android system. In some embodiments, the interface may include a menu of the electronic device. In some embodiments, the interface 122 may comprise at least one interface object, such as a widget, an application icon, and/or a button. The processing unit 130 can perform the method for displaying interfaces of the present invention, which will be discussed further in the following paragraphs.

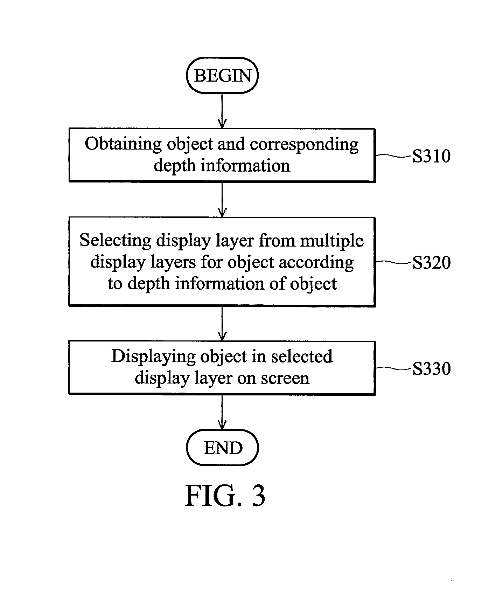

Fig. 3 is a flowchart of an embodiment of a method for displaying interfaces of the invention. The method for displaying interfaces can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto. In the embodiment, each object of an image, such as a background image can be displayed in a specific display layer according to the corresponding depth information.

In step S310, at least one object, and corresponding depth information are obtained. It is understood that, in some embodiments, an object segmentation operation can be performed to an image to obtain the object. As described, the depth information can be used for 3D display, thus showing a 3D effect for the corresponding objects on the screen. In step S320, a display layer is selected from multiple display layers for the object according to the depth information of the object. Similarly, in the multiple display layer structure, when the multiple display layers are simultaneously displayed on a screen of the electronic device, all or a part of the data displayed in a lower display layer may be covered by data displayed in an upper display layer, and the upper display layer is visually above the lower display layer. It is understood that, in some embodiments, a number of display layers can be predefined in the system, and the depth information of the object can be normalized based on the number of the display layers, such that a specific display layer can be accordingly specified for the object. Then, in step S330, the object is displayed in the selected display layer on the screen.

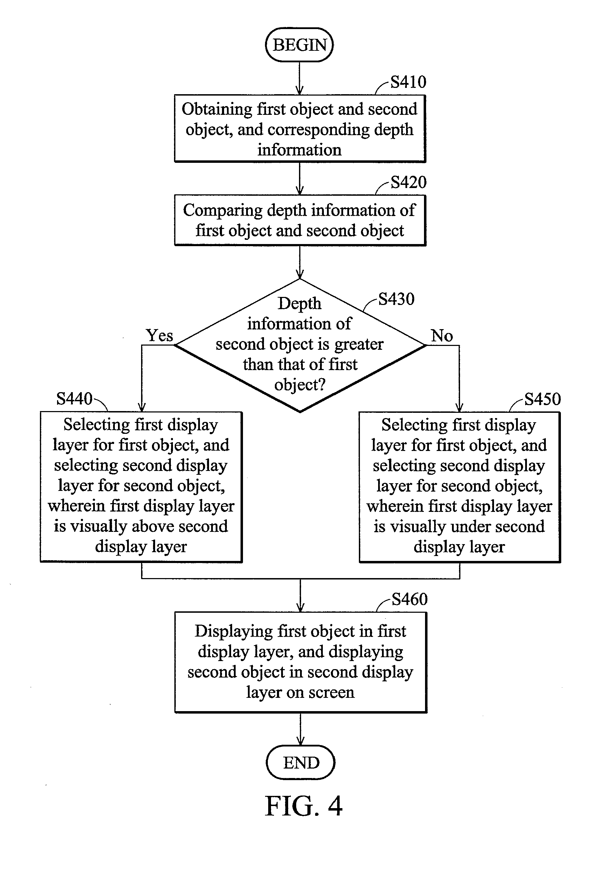

Fig. 4 is a flowchart of another embodiment of a method for displaying interfaces of the invention. The method for displaying interfaces can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto. In the embodiment, objects of an image, such as a background image can be respectively displayed in various display layers according to the corresponding depth information.

In step S410, a first object and a second object, and corresponding depth information are obtained. Similarly, in some embodiments, an object segmentation operation can be performed to an image to obtain the first object and the second object. Similarly, the depth information can be used for 3D display, thus showing a 3D effect for the corresponding objects on the screen. In step S420, the depth information of the first object and the depth information of the second object are compared. In step S430, it is determined whether the depth information of the second object is greater than the depth information of the first object. When the depth information of the second object is greater than the depth information of the first object (Yes in step S430), in step S440, a first display layer is selected from the multiple display layers for the first object, and a second display layer is selected from the multiple display layers for the second object, wherein the second display layer is visually under the first display layer.

When the depth information of the second object is not greater than the depth information of the first object (No in step S430), in step S450, a first display layer is selected from the multiple display layers for the first object, and a second display layer is selected from the multiple display layers for the second object, wherein the second display layer is visually above the first display layer. Similarly, in the multiple display layer structure, when the multiple display layers are simultaneously displayed on a screen of the electronic device, all or a part of the data displayed in a lower display layer may be covered by data displayed in an upper display layer, and the upper display layer is visually above the lower display layer. After the display layers for the first object and the second object are selected, in step S460, the first object is displayed in the first display layer, and the second object is displayed in the second display layer on the screen.

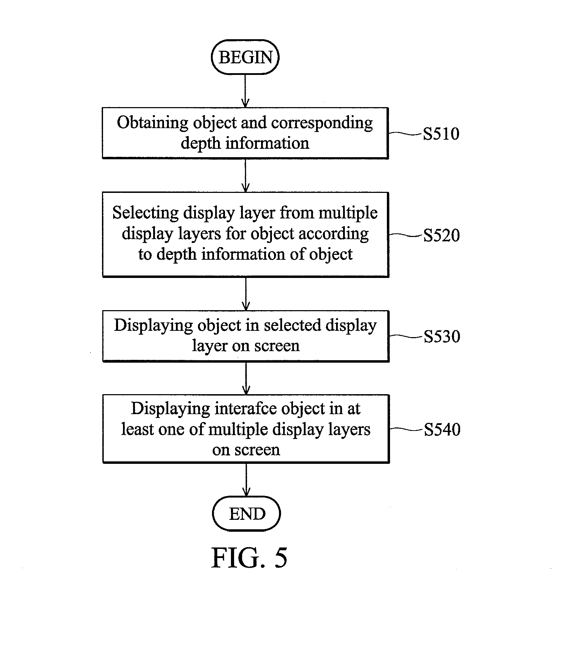

Fig. 5 is a flowchart of another embodiment of a method for displaying interfaces of the invention. The method for displaying interfaces can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto. In the embodiment, in addition to the object of an image, each interface object of an interface can be displayed in a specific display layer (or called an interface display layer).

In step S510, at least one object, and corresponding depth information are obtained. Similarly, in some embodiments, an object segmentation operation can be performed to an image to obtain the object. The depth information can be used for 3D display, thus showing a 3D effect for the corresponding objects on the screen. In step S520, a display layer is selected from multiple display layers for the object according to the depth information of the object. Similarly, in the multiple display layer structure, when the multiple display layers are simultaneously displayed on a screen of the electronic device, all or a part of the data displayed in a lower display layer may be covered by data displayed in an upper display layer, and the upper display layer is visually above the lower display layer.

It is understood that, in some embodiments, a number of display layers can be predefined in the system, and the depth information of the object can be normalized based on the number of the display layers, such that a specific display layer can be accordingly specified for the object. After the display layer is selected, in step S530, the object is displayed in the selected display layer on the screen. Then, in step S540, a specific display layer is selected from the multiple display layers for the interface object of the interface, and the interface object is displayed in the specific display layer on the screen.

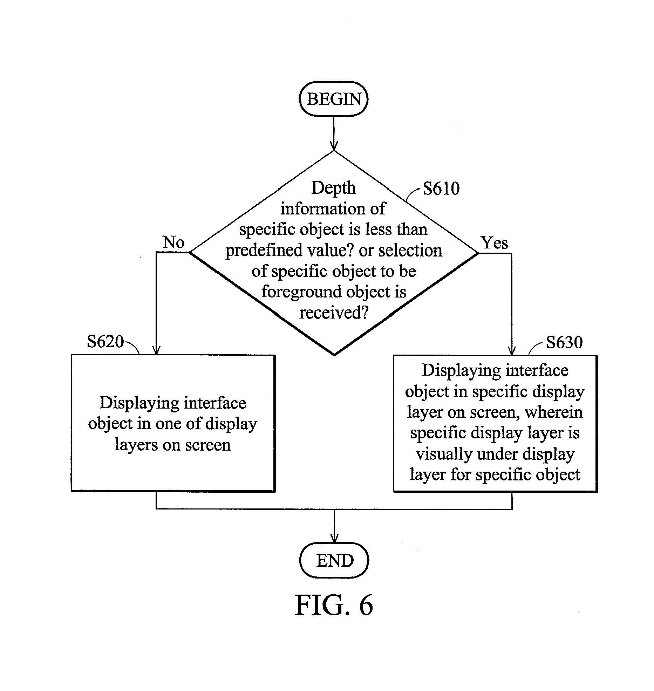

It is understood that, the selection of the specific display layer for the interface object can be performed according to various applications. Fig. 6 is a flowchart of an embodiment of a method for displaying interface objects of an interface of the invention. In step S610, it is determined whether the depth information corresponding to the object of the image is less than a predefined value, or whether a selection of an object of the image is received, in which the object is selected as a foreground object of the image.

When the depth information corresponding to the object of the image is not less than the predefined value, or no foreground object selection of the image is received (No in step S610), in step S620, one of the multiple display layers is selected, and the interface object is displayed in the selected display layer on the screen. When the depth information corresponding to the object of the image is less than the predefined value, or a foreground object selection of the image is received (Yes in step S610), in step S630, a specific display layer is selected from the multiple display layers, and the interface object is displayed in the specific display layer on the screen, wherein the specific display layer is visual under the display layer selected for the object of the image. It is understood that, in some embodiments, when the interface object is displayed in the specific display layer, the interface object is displayed at a specific position of the screen according to a position of the object of the image to be displayed on the screen, such that the interface object displayed in the specific display layer is not covered by the object of the image displayed in the corresponding display layer.

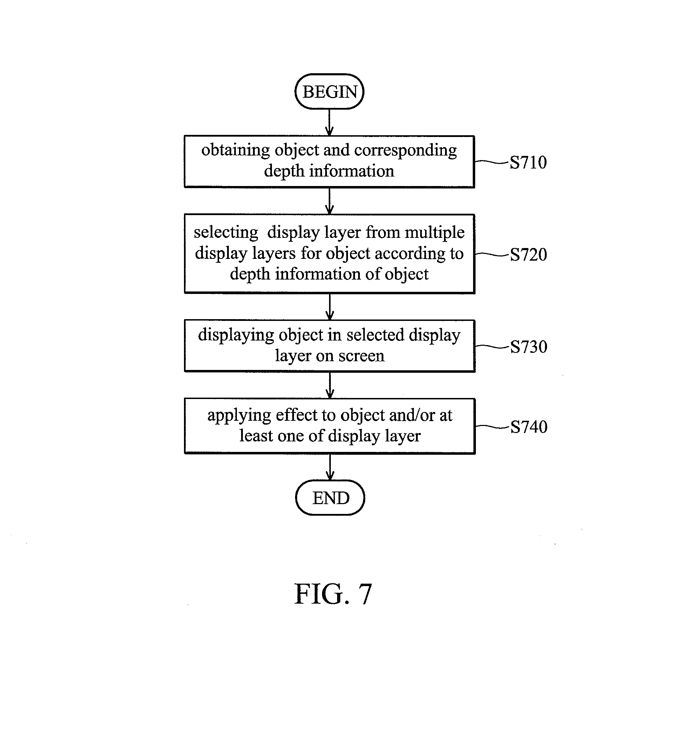

Fig. 7 is a flowchart of another embodiment of a method for displaying interfaces of the invention. The method for displaying interfaces can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto. In the embodiment, an effect can be applied to objects and/or display layers for various applications.

In step S710, at least one object, and corresponding depth information are obtained. Similarly, in some embodiments, an object segmentation operation can be performed to an image to obtain the object. The depth information can be used for 3D display, thus showing a 3D effect for the corresponding objects on the screen. In step S720, a display layer is selected from multiple display layers for the object according to the depth information of the object. Similarly, in the multiple display layer structure, when the multiple display layers are simultaneously displayed on a screen of the electronic device, all or a part of the data displayed in a lower display layer may be covered by data displayed in an upper display layer, and the upper display layer is visually above the lower display layer. It is understood that, in some embodiments, a number of display layers can be predefined in the system, and the depth information of the object can be normalized based on the number of the display layers, such that a specific display layer can be accordingly specified for the object. After the display layer is selected, in step S730, the object is displayed in the selected display layer on the screen.

Then, in step S740, an effect is applied to the object or at least one of the multiple display layers. It is understood that, in some embodiments, the effect may comprise an animation, or a replacement of a specific object in a specific display layer. For example, action can be specified to be performed on the first object O1 in Fig. 2A, such as a rotation or a swinging action. For example, an animation, such as a waterfall animation or a defoliation animation can be applied to the display layer L2 in Fig. 2A. For example, the second object 02 displayed in the display layer L3 in Fig. 2A can be replaced with another object or picture.

Therefore, the methods and systems for displaying interfaces can display objects of an image and/or an interface in various display layers based on corresponding depth information, such that a larger variety of applications can be accordingly developed, thus, enhancing the value of devices and increasing user experience.

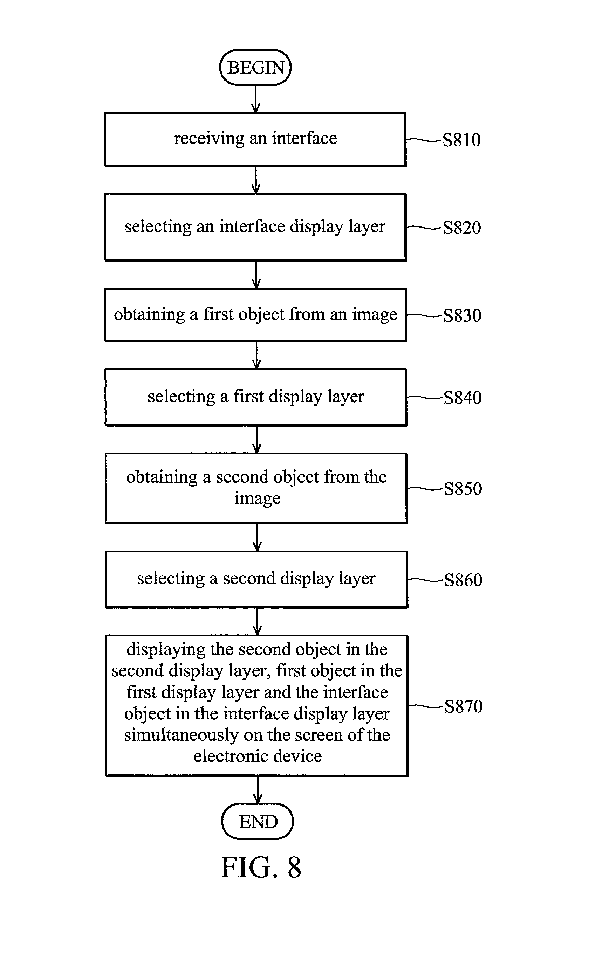

Fig. 8 is a flowchart of another embodiment of a method for displaying interfaces of the invention. The method for displaying interfaces can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto.

In step S810, an interface containing at least one interface object is received by a processor of an electronic device. In step S820, the processor selects an interface display layer for displaying the interface. The processor further set a predetermined value according to the interface display layer, and when a depth information of an object is not greater than the predetermined value, the object is regarded as a foreground object. If the depth information of the object is greater than the predetermined value, the object is regarded as a background object.

In step S830, a first object having a first depth information is obtained from an image. In step S840, the processor selects a first displayer for displaying the first object according to the first depth information. In this embodiment, the first depth information is not greater than the predetermined value, thus, the first display layer is above the interface display layer.

In step S840, the processor receives a second object having a second depth information. In the step S850, the processor selects a second display layer according to the second depth information. If the second depth information is greater than the predetermined value, the second display layer is under the interface display layer. If the second depth information is not greater than the predetermined value, the second display layer is the first display layer.

In another embodiment, when the second depth information is not greater than the predetermined value but greater than the first depth information, the processor inserts the second display layer to be between the first display layer and the interface display layer. When the second depth information is not greater than both the predetermined value and the first depth information, the processor inserts the second display layer to be above the first display layer.

In the described paragraph, the processor has to determine whether the received object is a foreground object or a background object according to corresponding depth information. However, in another embodiment, when the processor receives the object, a tag, mark or identification code is attached with the object to indicate that the received object is a foreground object or a background object. In a three layer display mechanism, such as shown in Figs. 2A and 2B, the interface display layer is the middle layer, the foreground object is display in the front layer above the middle layer and the background object is display in the background layer under middle layer.

In anther embodiment, the display mechanism comprises more than three displayers. The processor can determine the layer for each object according to at least two predetermined value. In another embodiment, when the processor receives the objects, each object contains layer information to indicate which display layer the object should be placed.

In the step S860, the processor displays the second object in the second display layer, first object in the first display layer and the interface object in the interface display layer simultaneously on the screen of the electronic device.

Fig. 9 is a schematic diagram illustrating an embodiment of an electronic device for displaying interfaces of the invention. The electronic device may be a PDA, a smart phone, a mobile phone, an MID, a laptop computer, a car computer, a digital camera, a multi-media player, a game device, or any other type of mobile computational device, however, it is to be understood that the invention is not limited thereto.

The electronic device 900 comprises a screen 901, a storage 902 storing objects 903 and corresponding depth information 904, an interface generation unit 905, an object segmentation unit 906 and a processor 907. The screen 901 can display data, such as texts, figures, interfaces, and/or information. It is understood that, in some embodiments, the screen 901 may be integrated with a touch-sensitive device (not shown). The touch-sensitive device has a touch-sensitive surface comprising sensors in at least one dimension to detect contact and movement of at least one object (input tool), such as a pen/stylus or finger near or on the touch-sensitive surface. Accordingly, users are able to input commands or signals via the screen. It is noted that, the data displayed on the screen is based on a multiple display layer structure, wherein a plurality of objects can be displayed in different display layers.

When the electronic device 900 receives an image to be set as a dynamic wallpaper of the electronic device 900, the object segmentation unit 906 performs an objection segmentation process on the image to obtain at least one object. The objection segmentation process segments foreground objects and background objects of the image. The detail description can be referred to the Figs. 9-12 of the U.S. Provisional Application No. 61/ 505,298 filed July 7. 2011 and corresponding descriptions. In one embodiment, the object segmentation unit 906 is a software or a program executed by the processor 907 or a graph processing unit (not shown in Fig. 9).

The object segmentation unit 906 stores the acquired objects in the storage device 902, such as the objects 903 and corresponding depth information 904. The processor 907 receives an interface containing at least one interface object from the interface generation unit 905. Then, the processor 907 receives a first object of the objects 903 and corresponding first depth information. The processor 907 compares the first depth information with a predetermined value to determine whether the first object is a foreground object or a background object. The detail operation of the processor 907 can be referred to the steps S830-S850, and not described here for briefly. After that the processor 907 displays the objects 903 in the corresponding display layers and the interface objects in the interface display layer simultaneously on the screen 901.

Furthermore, the effect applied in the step S740 can also be applied to the electronic device 900 to increase fun of the interaction between the user and the electronic device 900.

Methods for displaying interfaces, or certain aspects or portions thereof, may take the form of a program code (i.e., executable instructions) embodied in tangible media, such as floppy diskettes, CD-ROMS, hard drives, or any other non-transitory machine-readable storage medium, non-transitory computer readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for displaying interfaces, for use in an electronic device, comprising:
providing an interface comprising at least one interface object;
selecting an interface display layer;
obtaining a first object from an image;
selecting a first display layer; and
displaying the first object in the first display layer and the interface object in the interface display layer simultaneously on a screen of the electronic device, wherein the first displayer is above the interface display layer.

2. The method as claimed in claim 1, further comprising:
obtaining a second object from the image;
selecting a second display layer which is under the interface display layer; and
displaying the second object in the second display layer, first object in the first display layer and the interface object in the interface display layer simultaneously on the screen of the electronic device.

3. The method as claimed in claim 1, further comprising:
obtaining a second object from the image;
inserting a second display layer which is located between the first displayer and the interface display layer; and
displaying the second object in the second display layer, first object in the first display layer and the interface object in the interface display layer simultaneously on the screen of the electronic device.

4. The method as claimed in claim 1, further comprising:
obtaining a second object from the image;
inserting a second display layer which is above the first displayer; and
displaying the second object in the second display layer, first object in the first display layer and the interface object in the interface display layer simultaneously on the screen of the electronic device.

5. The method as claimed in claim 2, 3 or 4 further comprising:
obtaining the image; and
performing an object segmentation operation to the image to obtain the first object and the second object.

6. The method as claimed in one of the preceding claims, wherein the interface object is displayed at a specific position of the screen according to a position of the first object to be displayed on the screen, such that the interface object displayed in the interface display layer is not covered by the first object displayed in the first display layer.

7. The method as claimed in one of the preceding claims, further comprising applying an effect to the first object, the first display layer or the interface display layer, wherein the effect comprises an animation.

8. A system for displaying interfaces for use in an electronic device, comprising:
a storage unit storing a first object and an interface object;
a screen to display multiple display layers, wherein when the multiple display layers are simultaneously displayed on the screen, all or a part of the data displayed in a lower display layer may be covered by data displayed in an upper display layer, and the upper display layer is visually above the lower display layer;
and
a processing unit to select an interface display layer from multiple display layers and a first display layer above the interface displayer, and display the first object in the first display layer and the interface object in the interface display layer simultaneously on the screen.

9. The system as claimed in claim 8, wherein the first object has a first depth information and the first depth information is greater than a predetermined value.

10. The system as claimed in claim 8 or 9, wherein the storage unit further stores a second object having a second depth information, and the processing unit selects a second display layer according to the second depth information and displays the second object in the second display layer, first object in the first display layer and the interface object in the interface display layer simultaneously on the screen.

11. The system as claimed in claim 10, wherein when the second depth information is not greater than a predetermined value, the second display layer is under the interface displayer, and when the second depth information is greater than the predetermined value but not greater than a first depth information of the first object, the second display is inserted between the first display layer and the interface display layer.

12. The system as claimed in claim 10 or 11, wherein the processing unit further obtains an image, and performs an object segmentation operation to the image to obtain the first object and the second object.

13. The system as claimed in one of the claims 8 to 12, wherein the processing unit further displays the interface object at a specific position of the screen according to a position of the first object to be displayed on the screen, such that the interface object displayed in the third display layer is not covered by the first object displayed in the first display layer.

14. The system as claimed in one of the claims 8 to 13, wherein the processing unit further applies an effect to the first object or at least one of the multiple display layers, wherein the effect comprises an animation.

15. The system as claimed in one of the claims 8 to 14, wherein the first object is a foreground object, and when the processing unit receives a background object, the processing unit select a second display layer under the interface display layer and display the background object in the second display layer, the first object in the first display layer and the interface object in the interface display layer simultaneously on the screen.
